# EUROPÄISCHE PATENTANMELDUNG

(11) **EP 3 403 868 A1**
(43) Veröffentlichungstag der Anmeldung: **21.11.2018**
(21) Anmeldenummer: 17171089.0
(22) Anmeldetag: 15.05.2017
(51) Int. Cl.: B60L 11/18, G08G 1/015, G08G 1/14

(54) **VERFAHREN UND VORRICHTUNG ZUR RECHNERGESTÜTZTEN FAHRZEUGIDENTIFIZIERUNG**

(71) Anmelder: Siemens Aktiengesellschaft, 80333 München (DE)
(72) Erfinder: Falk, Rainer, 85586 Poing (DE); Fries, Steffen, 85598 Baldham (DE)

(57) **Zusammenfassung**

Die Erfindung betrifft ein Verfahren und eine Vorrichtung, die verhindern, dass Stellplätze zum Laden von Elektrofahrzeugen blockiert werden. Weiterhin wird eine Alternative geschaffen, um einen Ladevorgang für berechtigte Fahrzeuge freizuschalten. Diese kann ohne aufwendige IT/Security-Infrastruktur aufgesetzt werden. Zusätzlich kann die Information für Leitsysteme genutzt werden, die zum einen die noch freien Ladeplätze nach Art der Lademöglichkeiten anzeigen und ggf. das Fahrzeug zu dem vorgesehenen Ladeplatz leiten.

## Beschreibung

Die Erfindung bezieht sich auf ein Verfahren und eine Vorrichtung zur rechnergestützten Fahrzeugidentifizierung.

Es sind Ladesäulen bzw. Ladestationen bekannt, um ein Elektrofahrzeug drahtgebunden (Kabel, Pantograph) oder drahtlos (induktiv) zu laden. Durch konventionelle Sicherheitsmaßnahmen zum eCar-Charging wird sichergestellt, dass nur berechtigte Nutzer entsprechend ihrer Berechtigung eine Ladesäule nutzen können (Access Control, Authorization).

Es wird jedoch nicht verlässlich erreicht, dass berechtigte Nutzer eine Ladesäule tatsächlich nutzen können (Verfügbarkeit). Es besteht ein Bedarf sicherzustellen, dass berechtigte Nutzer eine Ladesäule nutzen können. Weiterhin besteht ein Bedarf an einfach realisierbaren und betreibbaren Lösungen zum Schutz der Nutzung einer Ladesäule.

Eine Aufgabe der vorliegenden Erfindung ist es, ein Verfahren und eine Vorrichtung bereitzustellen, dass ein berechtigter Nutzer eine Ladesäule nutzen kann.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Gemäß eines ersten Aspekts betrifft die Erfindung eine Vorrichtung zur rechnergestützten Fahrzeugidentifizierung umfassend:
- ein Kamerasystem zum Erfassen von Bilddaten eines Fahrzeugs;
- eine Identifizierungseinheit zum Verarbeiten der Bilddaten, wobei
   - die Bilddaten mit vorgegebenen Fahrzeugdaten für Elektrofahrzeuge verglichen werden,
   - bei einer Übereinstimmung der Bilddaten mit den vorgegebenen Fahrzeugdaten das Fahrzeug als Elektrofahrzeug identifiziert wird;
- ein Freigabesystem das eine Ladestation für Elektrofahrzeuge für das Fahrzeug freigibt, wenn das Fahrzeug ein Elektrofahrzeug ist.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul", einer "Einheit", einer "Komponente" und dergleichen kann im Zusammenhang mit der Erfindung beispielsweise ein Prozessor und/oder ein Speicher zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu realisieren.

Das Verfahren ist dahingehend vorteilhaft, da dieses einfach realisierbar ist. Zudem kann mit dem Verfahren insbesondere erkannt werden, ob Stellplätze zum Laden von Elektrofahrzeugen blockiert werden. Weiterhin wird insbesondere eine Alternative geschaffen, um einen Ladevorgang für berechtigte Fahrzeuge freizuschalten. Diese kann vorzugsweise ohne aufwendige IT/Security-Infrastruktur in den Ladesäulen und erforderliche Backend-Securityinfrastruktur wie eine PKI realisiert werden. Zusätzlich kann die Information bzw. die Erfindung insbesondere für Leitsysteme genutzt werden, die zum einen die noch freien Ladeplätze (z. B. Ladestationen) nach Art der Lademöglichkeiten anzeigt und ggf. das Fahrzeug zu dem vorgesehenen Ladeplatz (z. B. Ladestation) leiten.

Bei einer ersten Ausführungsform der Vorrichtung sind die Bilddaten und/oder die vorgegebenen Fahrzeugdaten
- ein Kennzeichen des Fahrzeugs und/oder
- ein Typ des Fahrzeugs und/oder
- ein Hersteller des Fahrzeugs und/oder
- eine Fahrzeugseriennummer und/oder
- eine Versicherungsnummer und/oder
- eine Kennzeichnung eines Mobility Operators und/oder
- Charakteristiken eines Fahrzeugmodells.

Das Verfahren ist dahingehend vorteilhaft, um insbesondere verschiedene Informationen der Bilddaten zu verwenden, ob es sich beispielsweise bei einem Fahrzeug um ein Elektrofahrzeug handelt.

Bei einer weiteren Ausführungsform der Vorrichtung umfasst eine Zufahrt der Ladestation zumindest eine Kamera des Kamerasystems, um die Bilddaten während einem Einfahren des Fahrzeugs zu erfassen. Alternativ oder zusätzlich umfasst die Ladestation zumindest eine Kamera des Kamerasystems, um die Bilddaten beim Abstellen des Fahrzeugs zu erfassen. Alternativ oder zusätzlich umfasst ein Parkhaus zumindest eine Kamera des Kamerasystems, um die Bilddaten während einem Einfahren des Fahrzeugs zu erfassen. Die Bilddaten, die durch die Videokamera erfasst werden, können sich beispielsweise auf das sichtbare Licht(spektrum) und/oder das Infrarotlicht(spektrum) und/oder das Ultraviolettlicht(spektrum) beschränken. Die Videokamera kann insbesondere eine Hyperspektral-Imaging-Videokamera sein, die beispielsweise eng beieinander liegende Wellenlängen erfassen kann. Eine Videokamera im Sinne der Erfindung kann beispielsweise auch andere bildgebende Verfahren verwenden, z. B. Radar-Technologie oder Röntgenstrahlung oder Ultraschall. Diese Verfahren können insbesondere einzeln oder in Kombination angewendet werden. Dies ist dahingehend vorteilhaft, dass eine Manipulation erschwert wird. Dadurch können beispielsweise Sicherheitsmerkmale eines Fahrzeugkennzeichens oder einer am Fahrzeug angebrachten Vignette überprüft werden. Weiterhin können insbesondere bildgebende Verfahren die interne Struktur eines Fahrzeugs erfassen, d.h. den Typ bzw. die Art von verbauten Fahrzeugkomponenten. Anhand von Mustererkennungsverfahren kann beispielsweise erkannt werden, ob ein Fahrzeug einen elektrischen Antrieb enthält, d.h. ob es sich um ein Elektrofahrzeug handelt. Weiterhin kann beispielsweise der Typ des Ladesteckers bzw. der Ladeschnittstelle eines Fahrzeugs erkannt werden: Dazu kann der Typ des Fahrzeugs (Hersteller, Modell) beispielsweise durch optische Mustererkennung erkannt werden. In einer anderen Variante kann beispielsweise ein durch eine Schutzabdeckung ("Tankdeckel") verdeckte Ladeschnittstelle durch bildgebende Verfahren wie beispielsweise Ultraschall oder Radar erkannt werden. Auch kann insbesondere erkannt werden, ob beispielsweise ein Fahrzeug eine Vorrichtung zum induktiven Laden aufweist.

Das Verfahren ist dahingehend vorteilhaft, um insbesondere möglichst frühzeitig zu identifizieren, ob das Fahrzeug beispielsweise ein Elektrofahrzeug ist. Hierzu können beispielsweise mehrere Kameras bzw. deren Bilddaten z. B. bei der Einfahrt und an der Ladestation kombiniert werden.

Bei einer weiteren Ausführungsform der Vorrichtung gibt das Freigabesystem eine mechanische Blockierung und/oder elektronische Blockierung für einen Stellplatz der Ladestation frei.

Das Verfahren ist dahingehend vorteilhaft, um insbesondere zu verhindern, dass z. B. ein benzinangetriebenes Fahrzeug die Ladestation blockiert. Hierzu kann das Freigabesystem beispielsweise beim Erkennen eines Elektrofahrzeuges einen Poller oder eine Schranke öffnen, damit insbesondere das Elektrofahrzeug auf den Stellplatz der Ladestation fahren kann.

Bei einer weiteren Ausführungsform der Vorrichtung umfasst die Ladestation und/oder die Vorrichtung eine Authentifizierungseinheit und/oder eine Autorisierungseinheit.

Das Verfahren ist dahingehend vorteilhaft, um insbesondere die Authentifizierungsdaten beim Identifizieren zu berücksichtigen und somit leichter festzustellen, ob es sich um ein Elektrofahrzeug handelt. Hierzu kann sich beispielsweise das Fahrzeug bei der Einfahrt authentisieren (z. B. über eine drahtlose Verbindung). Zusätzlich zur Authentisierung kann beispielsweise auch die Autorisierung geprüft werden (z. B. ob der Vertrag mit dem Mobilityoperator noch aktuell ist oder ein Verzug bei der Begleichung offener Rechnungen besteht), sodass vorzugsweise ein Stellplatz freigegeben werden kann, der insbesondere bestimmte Eigenschaften erfüllt. Bestimmte Eigenschaften können dabei beispielsweise die Stellplatzgröße, der Typ der Ladestation (z. B. für kabelgebundenes Laden oder induktives Laden) oder die Lage des Stellplatzes sein (z. B. dass dieser behindertengerecht ist und nahe an einem Aufzug liegt).

Bei einer weiteren Ausführungsform der Vorrichtung ist das Freigabesystem ein Fahrzeugleitsystem und das Fahrzeugleitsystem leitet das Fahrzeug zu einer freien und/oder geeigneten Ladestation für das Fahrzeug und das Leiten erfolgt insbesondere mittels eines Telematikdienstes.

Das Verfahren ist dahingehend vorteilhaft, um insbesondere in einem Parkhaus mit einem Telematikdienst (z. B. ein Dienst für die Verkehrstelematik in dem Parkhaus) ein Fahrzeug an einen freien Stellplatz mit einer Ladestation zu leiten.

Bei einer weiteren Ausführungsform der Vorrichtung gibt das Freigabesystem einen Typ der Ladestation an und das Angeben erfolgt insbesondere mittels eines Telematikdienstes. Der Telematikdienst kann dabei insbesondere durch ein Leitsystem in der Ladestation oder durch ein fahrzeuginternes Navigationssystem (entweder fest verbaut oder mobil, z.B. auch per Smartphone) realisiert werden. Die Übermittlung der Daten des Freigabesystems an das Fahrzeug kann beispielsweise direkt (z. B. drahtlos über WLAN) oder indirekt (über einen Telematikbetreiber mittels Backendkommunikation) realisiert werden.

Das Verfahren ist dahingehend vorteilhaft, um insbesondere in einem Parkhaus mit einem Telematikdienst (z. B. ein Dienst für die Verkehrstelematik in dem Parkhaus) anzugeben, welche Ladestationen frei sind und von welchem Typen (z. B. für kabelgebundenes Laden oder induktives Laden) diese sind.

Bei einer weiteren Ausführungsform der Vorrichtung umfasst die Vorrichtung zumindest eine weitere Einheit oder mehrere weitere Einheiten zur Durchführung des erfindungsgemäßen Verfahrens (oder einer seiner Ausführungsformen).

Gemäß eines weiteren Aspekts betrifft die Erfindung ein Verfahren zur rechnergestützten Fahrzeugidentifizierung mit folgenden Verfahrensschritten:
- Erfassen von Bilddaten eines Fahrzeugs mittels eines Kamerasystems;
- Verarbeiten der Bilddaten, wobei
   - die Bilddaten mit vorgegebenen Fahrzeugdaten für Elektrofahrzeuge verglichen werden,
   - bei einer Übereinstimmung der Bilddaten mit den vorgegebenen Fahrzeugdaten das Fahrzeug als Elektrofahrzeug identifiziert wird;
- Freigeben einer Ladestation für Elektrofahrzeuge für das Fahrzeug, wenn das Fahrzeug ein Elektrofahrzeug ist.

Bei einer weiteren Ausführungsform des Verfahrens wird beim Freigeben eine mechanische Blockierung und/oder elektronische Blockierung für einen Stellplatz der Ladestation freigegeben.

Bei einer weiteren Ausführungsform des Verfahrens wird zum Laden an der Ladestation das Fahrzeug authentisiert.

Bei einer weiteren Ausführungsform des Verfahrens wird beim Freigeben das Fahrzeug zu einer freien und/oder geeigneten Ladestation für das Fahrzeug geleitet und das Fahrzeug wird insbesondere mittels eines Telematikdienstes geleitet.

Bei einer weiteren Ausführungsform des Verfahrens wird beim Freigeben ein Typ der Ladestation angegeben und der Typ wird insbesondere mittels eines Telematikdienstes angegeben.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass die genannte erfindungsgemäße Vorrichtung erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es die erfindungsgemäße Vorrichtung erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung als ein Ablaufdiagramm;
- Fig. 2: ein zweites Ausführungsbeispiel der Erfindung;
- Fig. 3: ein drittes Ausführungsbeispiel der Erfindung;

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(-Komponenten) oder ausschließlich per Software(-Komponenten) realisiert werden. Alternativ und/oder zusätzlich kann der Fachmann im Rahmen seines fachmännischen Könnens weitestgehend beliebige erfindungsgemäße Kombinationen aus Hardware(-Komponenten) und Software(-Komponenten) wählen, um erfindungsgemäße Realisierungsvarianten umzusetzen.

Eine erfindungsgemäße Kombination aus Hardware(-Komponenten) und Software(-Komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies expliziert in dem jeweiligen Ausführungsbeispiel genannt sein muss.

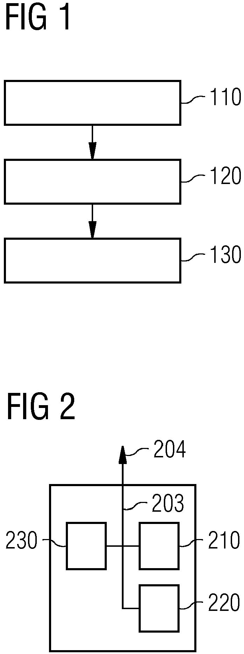

Die Fig. 1 zeigt ein erstes Ausführungsbeispiel der Erfindung als ein Ablaufdiagramm des erfindungsgemäßen Verfahrens zur rechnergestützten Fahrzeugidentifizierung.

Das Verfahren umfasst einen ersten Verfahrensschritt 110 zum Erfassen von Bilddaten eines Fahrzeugs mittels eines Kamerasystems.

Die Bilddaten können dabei folgende Fahrzeugdaten umfassen:
- ein Kennzeichen des Fahrzeugs und/oder
- ein Typ des Fahrzeugs und/oder
- ein Hersteller des Fahrzeugs (z. B. ein Hersteller der nur Elektrofahrzeuge produziert, z. B. Tesla) und/oder
- eine Fahrzeugseriennummer (z. B. VIN, vehicle identification number) und/oder
- eine Versicherungsnummer und/oder
- eine Kennzeichnung eines Mobility Operators (z. B. über den die Ladeverträge abgeschlossen werden, die insbesondere an der Frontscheibe angebracht sind) und/oder
- Charakteristiken eines Fahrzeugmodells (z. B. Ausgestaltung des Kühlergrills bei Hyundai Ionic; Typenangabe auf Heckklappe oder Kühler, z. B. E- Golf).
- Der Typ einer Ladeschnittstelle (Steckverbindung für kabelegebundenes Laden, Vorrichtung zum induktiven Laden, Vorhandensein eines Pantographen)
- Die im Fahrzeug verbauten Komponenten (z.B. Elektroantrieb). Diese Bilddaten können z.B. durch eine Ultraschall- oder Radar-basierte Videokamera erfasst werden.

Das Verfahren umfasst einen zweiten Verfahrensschritt 120 zum Verarbeiten der Bilddaten, wobei die Bilddaten mit vorgegebenen Fahrzeugdaten für Elektrofahrzeuge verglichen werden und bei einer Übereinstimmung der Bilddaten mit den vorgegebenen Fahrzeugdaten das Fahrzeug als Elektrofahrzeug identifiziert wird. Die vorgegebenen Fahrzeugdaten können beispielsweise in einer Datenbank hinterlegt sein.

Die vorgegebenen Fahrzeugdaten können dabei folgende Fahrzeugdaten umfassen:
- ein Kennzeichen des Fahrzeugs und/oder
- ein Typ des Fahrzeugs und/oder
- ein Hersteller des Fahrzeugs (z. B. ein Hersteller der nur Elektrofahrzeuge produziert, z. B. Tesla) und/oder
- eine Fahrzeugseriennummer (z. B. VIN, vehicle identification number) und/oder
- eine Versicherungsnummer und/oder
- eine Kennzeichnung eines Mobility Operators (z. B. über den die Ladeverträge abgeschlossen werden, die insbesondere an der Frontscheibe angebracht sind) und/oder
- Charakteristiken eines Fahrzeugmodells (z. B. Ausgestaltung des Kühlergrills bei Hyundai Ionic; Typenangabe auf Heckklappe oder Kühler, z. B. E- Golf).
- Der Typ einer Ladeschnittstelle (Steckverbindung für kabelegebundenes Laden, Vorrichtung zum induktiven Laden, Vorhandensein eines Pantographen)
- Die im Fahrzeug verbauten Komponenten (z.B. Elektroantrieb, Inverter). Diese Bilddaten können z.B. durch eine Ultraschall- oder Radar-basierte Videokamera erfasst werden.

Beispielsweise können die Bilddaten das Logo des Fahrzeugherstellers des Fahrzeugs umfassen (z. B. Tesla) und mittels einer Bilderkennungssoftware diese Information aus den Bilddaten extrahiert werden. Diese Information wird nun mit den vorgegebenen Fahrzeugdaten abgeglichen. Im Falle des genannten Beispiels wird der Fahrzeughersteller als ausschließlicher Elektrofahrzeughersteller identifiziert und entsprechend auch das Fahrzeug als Elektrofahrzeug identifiziert.

Das Verfahren umfasst einen dritten Verfahrensschritt zum Freigeben 130 einer Ladestation für Elektrofahrzeuge für das Fahrzeug, wenn das Fahrzeug ein Elektrofahrzeug ist.

Die Fig. 2 zeigt ein zweites Ausführungsbeispiel der Erfindung als Vorrichtung.

Im Einzelnen zeigt Fig. 2 eine Vorrichtung mit einem Kamerasystem 210, einer Identifizierungseinheit 220, einem Freigabesystem und eine erste Kommunikationsschnittstelle 204, die über einen ersten Bus 203 miteinander kommunikativ verbunden sind.

Das Gerät kann beispielsweise zusätzlich noch eine weitere oder mehrere weitere Komponente/n umfassen, wie beispielsweise einen Prozessor, eine Speichereinheit, ein Eingabegerät, insbesondere eine Computertastatur oder eine Computermaus, und ein Anzeigegerät (z. B. einen Monitor). Der Prozessor kann beispielsweise mehrere weitere Prozessoren umfassen, wobei beispielsweise die weiteren Prozessoren jeweils eines oder mehrere der Module realisieren. Alternativ realisiert der Prozessor insbesondere alle Module des Ausführungsbeispiels. Die weitere/n Komponente/n können beispielsweise ebenfalls über den ersten Bus 203 miteinander kommunikativ verbunden sein.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Das Kamerasystem 210 ist zum Erfassen von Bilddaten eines Fahrzeugs eingerichtet.

Das Kamerasystem 210 kann beispielsweise mittels des Prozessors, der Speichereinheit, (einer oder mehreren) Kameras und einer ersten Programmkomponente realisiert werden, wobei beispielsweise durch ein Ausführen von Programmbefehlen der ersten Programmkomponente der Prozessor derart konfiguriert wird oder durch die Programmbefehle der Prozessor derart konfiguriert ist, dass die Bilddaten erfasst werden.

Die Identifizierungseinheit 220 ist zum Verarbeiten der Bilddaten eingerichtet, wobei die Bilddaten mit vorgegebenen Fahrzeugdaten für Elektrofahrzeuge verglichen werden und bei einer Übereinstimmung der Bilddaten mit den vorgegebenen Fahrzeugdaten das Fahrzeug als Elektrofahrzeug identifiziert wird.

Die Identifizierungseinheit 220 kann beispielsweise mittels des Prozessors, der Speichereinheit und einer zweiten Programmkomponente realisiert werden, wobei beispielsweise durch ein Ausführen von Programmbefehlen der zweiten Programmkomponente der Prozessor derart konfiguriert wird oder durch die Programmbefehle der Prozessor derart konfiguriert ist, dass die Bilddaten verarbeitet werden.

Das Freigabesystem 230 ist zum Freigeben einer Ladestation für Elektrofahrzeuge für das Fahrzeug eingerichtet, wenn das Fahrzeug ein Elektrofahrzeug ist.

Das Freigabesystem 230 kann beispielsweise mittels des Prozessors, der Speichereinheit und einer dritten Programmkomponente realisiert werden, wobei beispielsweise durch ein Ausführen von Programmbefehlen der dritten Programmkomponente der Prozessor derart konfiguriert wird oder durch die Programmbefehle der Prozessor derart konfiguriert ist, dass die Ladestation freigegeben wird.

Mit anderen Worten zeigen Fig. 1 und Fig. 2 unterschiedliche Realisierungsvarianten der Erfindung. Dabei wird ein Fahrzeug beispielsweise bei einer Ladestation (z. B. einer Fahrzeug-Ladesäule) durch das Kamerasystem erfasst. Das Erfassen kann beispielsweise bei einer Zufahrt zu der Ladestation bzw. bei einem an einer Ladestation abgestellten Fahrzeug erfolgen.

Ist die Ladestation beispielsweise Teil eines Parkhauses mit Lademöglichkeiten für Elektrofahrzeuge oder eines Flottenmanagements, so kann die Erfassung des Fahrzeuges beispielsweise auch mit der Einfahrt auf das entsprechende Gelände beginnen und zur Ladeplatzzuweisung (Guidance Systems/Fahrzeugleitsystem) genutzt werden (z. B. zum Ladestationen-Belegungsmanagement).

Es kann dabei insbesondere das Kennzeichen des Fahrzeugs und/oder der Typ des Fahrzeugs ermittelt werden. Weiterhin können beispielsweise eine Fahrzeugseriennummer (VIN, vehicle identification number), eine Versicherungsnummer oder die Kennzeichnung eines Mobility Operators, über den die Ladeverträge abgeschlossen werden (die z. B. an der Frontscheibe angebracht sind) erkannt werden.

Auch kann beispielsweise bei Fahrzeugmodellen, die sowohl mit herkömmlichen Kraftstoffantrieb wie mit einem Elektroantrieb vermarktet werden, anhand von charakteristischen Merkmalen (z.B. Ausgestaltung des Kühlergrills bei Hyundai Ionic; Typenangabe auf Heckklappe oder Kühler, z. B. E- Golf) ein Fahrzeug als Elektroauto erkannt werden.

Abhängig von dem erkannten Fahrzeug (Typ, Exemplar anhand Kennzeichen und/oder VIN) erfolgt insbesondere eine Freigabe einer Lademöglichkeit der Ladestation:
- Beispielsweise eine automatische Freigabe des elektrischen Ladevorgangs (d.h. eine kryptographische Authentisierung wie bei ISO/IEC15118 oder eine manuelle Freigabe durch ein Token oder Kreditkartenbezahlung ist nicht erforderlich). Dadurch können insbesondere flexibel unterschiedliche Arten der Fahrzeugberechtigung unterstützt werden.
- Beispielsweise die Zufahrt zu einem Stellplatz wird freigegeben, indem eine mechanische Blockierung freigegeben wird (z. B. Schranke, Poller). Dadurch wird insbesondere verhindert, dass Stellplätze mit einer Ladestation für Elektrofahrzeuge durch nicht zum Laden berechtigte Fahrzeuge (oder Fahrzeuge ohne Elektromotor) blockiert werden.

In einer Variante kann dabei kann die optische Identifizierung (z. B. die Identifizierung anhand der Bilddaten) des Fahrzeugs bzw. des Fahrzeugtyps und die herkömmliche Authentisierung beim Ladevorgang (z. B. ISO/IEC15118, Freischaltung der Ladesäule) auch kombiniert werden.

In einer weiteren Variante wird die Erfindung mit einem (Fahrzeug)Leitsystem kombiniert und es können dabei beispielsweise die Art der Ladestation und/oder die freien/besetzten Ladestationen für induktives Laden oder drahtgebundenes Laden mit angezeigt werden. Diese Informationen können insbesondere in/durch (Verkehrs-)Telematikdienste zur Verfügung gestellt werden.

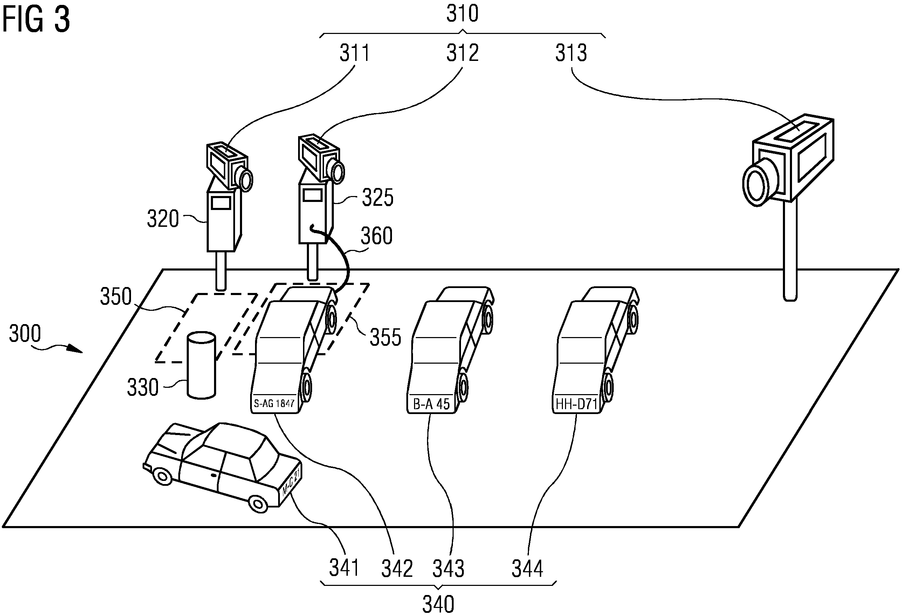

Die Fig. 3 zeigt ein drittes Ausführungsbeispiel der Erfindung, wobei dieses Ausführungsbeispiel problemlos mit den bisher genannten Ausführungsbeispiele und deren Varianten kombiniert werden kann.

Die Fig. 3 zeigt einen Parkplatz 300 mit zwei Stellplätzen, insbesondere einem ersten Stellplatz 350 und einen zweiten Stellplatz 355. Der erste Stellplatz 350 umfasst eine erste Ladestation 320 und der zweite Stellplatz umfasst eine zweite Ladestation 325, wobei die Ladestationen 320, 325 (z. B. Ladesäulen) zum Laden von Elektrofahrzeugen eingerichtet sind.

Zusätzlich ist ein Kamerasystem 310 dargestellt, das eine erste Kamera 311, eine zweite Kamera 312 und eine dritte Kamera 313 umfasst. Die erste Kamera 311 und die zweite Kamera 312 sind direkt an der Ladestation angeordnet und zum Erfassen von Bilddaten der Fahrzeuge 340 auf dem Parkplatz 300 eingerichtet.

Im Einzelnen sind hierbei ein erstes Fahrzeug 341, ein zweites Fahrzeug 342, ein drittes Fahrzeug 343 und ein viertes Fahrzeug 344 gezeigt.

Die erste Kamera 311 und die zweite Kamera 312 erkennen den Typ und das Kennzeichen von der Fahrzeuge 340.

Bei dem zweiten Fahrzeug 342 handelt es sich um ein Elektrofahrzeug. Dieses ist insbesondere über ein Ladekabel 360 mit der zweiten Ladestation 325 verbunden.

Mittels des Kamerasystems 320 wird beispielsweise durch die Kameras der Ladesäule (z. B. die zweite Kamera 325) und/oder der dritten Kamera 313 (z. B. eine Kamera zu Parkplatzüberwachung) das Fahrzeug optisch erkannt, indem beispielsweise die Bilddaten ausgewertet werden, so wie dies in Fig. 1 oder Fig. 2 erläutert wurde.

Außerdem kann beispielsweise das Kennzeichen des Fahrzeugs erkannt werden (hier "S-AG 1847"). Abhängig vom erkannten Fahrzeugtyp und/oder dem Fahrzeug-Kennzeichen gibt die Ladestation einen Ladevorgang frei (z. B. Freigabe oder Sperren des Ladevorgangs; maximale Ladeleistung, Auswahl des Lade-Steuerungskommunikationsprotokolls).

Der erste Stellplatz ist durch eine mechanische Blockierung 330 (z. B. einen Poller) gesperrt, sodass er nicht befahren werden kann. Wird ein anfahrendes Fahrzeug, z. B. das erste Fahrzeug 341, beispielsweise als Elektrofahrzeug erkannt, beispielsweise am Typ und/oder Kennzeichen des Fahrzeugs, so wird die mechanische Blockierung 330 freigegeben und der Poller beispielsweise automatisiert heruntergefahren.

Mit anderen Worten, wenn ein Fahrzeug als ein berechtigtes Fahrzeug zum Nutzen der ersten Ladestation 320 bzw. des ersten Stellplatzes 350 erkannt wird, so wird beispielsweise der Poller eingefahren, um das Abstellen des Fahrzeugs vor der Ladesäule zu ermöglichen.

Mit der Erfindung und deren Ausführungsbeispiele ist es möglich zu verhindern, dass beispielsweise Stellplätze zum Laden von Elektrofahrzeugen durch andere Fahrzeuge blockiert werden. Weiterhin wird insbesondere eine Alternative geschaffen, um einen Ladevorgang für berechtigte Fahrzeuge freizuschalten. Diese kann beispielsweise ohne aufwendige IT/Security-Infrastruktur aufgesetzt werden. Zusätzlich kann insbesondere die Information für ein Leitsystem genutzt werden, dass zum einen die noch freien Ladeplätze nach Art der Lademöglichkeiten anzeigt und ggf. das Fahrzeug zu dem vorgesehenen Ladeplatz leitet.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Vorrichtung zur rechnergestützten Fahrzeugidentifizierung umfassend:
- ein Kamerasystem (210, 310) zum Erfassen von Bilddaten eines Fahrzeugs;
- eine Identifizierungseinheit (220) zum Verarbeiten der Bilddaten, wobei
- die Bilddaten mit vorgegebenen Fahrzeugdaten für Elektrofahrzeuge verglichen werden,
- bei einer Übereinstimmung der Bilddaten mit den vorgegebenen Fahrzeugdaten das Fahrzeug als Elektrofahrzeug identifiziert wird;
- ein Freigabesystem (230) das eine Ladestation (320, 325) für Elektrofahrzeuge für das Fahrzeug freigibt, wenn das Fahrzeug ein Elektrofahrzeug ist.

2. Vorrichtung nach Anspruch 1, wobei
- die Bilddaten und/oder die vorgegebenen Fahrzeugdaten
- ein Kennzeichen des Fahrzeugs und/oder
- ein Typ des Fahrzeugs und/oder
- ein Hersteller des Fahrzeugs und/oder
- eine Fahrzeugseriennummer und/oder
- eine Versicherungsnummer und/oder
- eine Kennzeichnung eines Mobility Operators und/oder
- Charakteristiken eines Fahrzeugmodells sind.

3. Vorrichtung nach Anspruch 1 oder 2, wobei
- eine Zufahrt der Ladestation (320, 325) zumindest eine Kamera des Kamerasystems (210, 310) umfasst, um die Bilddaten während einem Einfahren des Fahrzeugs zu erfassen; und/oder
- die Ladestation (320, 325) zumindest eine Kamera des Kamerasystems (210, 310) umfasst, um die Bilddaten beim Abstellen des Fahrzeugs zu erfassen; und/oder
- ein Parkhaus zumindest eine Kamera des Kamerasystems (210, 310) umfasst, um die Bilddaten während einem Einfahren des Fahrzeugs zu erfassen.

4. Vorrichtung nach einem der vorhergehenden Ansprüche, wobei das Freigabesystem eine mechanische Blockierung (330) und/oder elektronische Blockierung für einen Stellplatz der Ladestation freigibt.

5. Vorrichtung nach einem der vorhergehenden Ansprüche, wobei die Ladestation (320, 325) und/oder die Vorrichtung eine Authentifizierungseinheit und/oder Autorisierungseinheit umfasst.

6. Vorrichtung nach einem der vorhergehenden Ansprüche, wobei
- das Freigabesystem ein Fahrzeugleitsystem ist und das Fahrzeug zu einer freien und/oder geeigneten Ladestation (320, 325) für das Fahrzeug leitet;
- das Leiten insbesondere mittels eines Telematikdienstes erfolgt.

7. Vorrichtung nach einem der vorhergehenden Ansprüche, wobei das Freigabesystem einen Typ der Ladestation (320, 325) angibt und das Angeben insbesondere mittels eines Telematikdienstes erfolgt.

8. Verfahren zur rechnergestützten Fahrzeugidentifizierung mit folgenden Verfahrensschritten:
- Erfassen (110) von Bilddaten eines Fahrzeugs mittels eines Kamerasystems (210, 310);
- Verarbeiten (120) der Bilddaten, wobei
- die Bilddaten mit vorgegebenen Fahrzeugdaten für Elektrofahrzeuge verglichen werden,
- bei einer Übereinstimmung der Bilddaten mit den vorgegebenen Fahrzeugdaten das Fahrzeug als Elektrofahrzeug identifiziert wird;
- Freigeben (130) einer Ladestation (320, 325) für Elektrofahrzeuge für das Fahrzeug, wenn das Fahrzeug ein Elektrofahrzeug ist.

9. Verfahren nach Anspruch 8, wobei beim Freigeben eine mechanische Blockierung (330) und/oder elektronische Blockierung für einen Stellplatz der Ladestation (320, 325) freigegeben wird.

10. Verfahren nach Anspruch 8 oder 9, wobei zum Laden an der Ladestation (320, 325) das Fahrzeug authentisiert wird.

11. Verfahren nach einem der Ansprüche 8-10, wobei beim Freigeben das Fahrzeug zu einer freien und/oder geeigneten Ladestation (320, 325) für das Fahrzeug geleitet wird und das Fahrzeug insbesondere mittels eines Telematikdienstes geleitet wird.

12. Verfahren nach einem der Ansprüche 8-11, wobei beim Freigeben ein Typ der Ladestation (320, 325) angegeben wird und der Typ insbesondere mittels eines Telematikdienstes angegeben wird.

13. Computerprogrammprodukt mit Programmbefehlen zur Durchführung der Verfahren nach einem der Ansprüche 8 - 12 und/oder einer Kombination der Verfahren.

14. Computerprogrammprodukt mit Programmbefehlen für ein Erstellungsgerät, das mittels der Programmbefehle konfiguriert wird, die Vorrichtung nach einem der Ansprüche 1 - 7 zu erstellen.

15. Bereitstellungsvorrichtung für das Computerprogrammprodukt nach Anspruch 13 und/oder 14, wobei die Bereitstellungsvorrichtung das Computerprogrammprodukt speichert und/oder bereitstellt.
